# EUROPEAN PATENT SPECIFICATION

(11) **EP 1 974 996 B1**
(45) Date of publication and mention of the grant of the patent: **18.04.2012**
(21) Application number: 07720371.9
(22) Date of filing: 12.03.2007
(51) Int. Cl.: B60P 7/15, B60P 7/13, F16B 2/02

(54) **F-SHAPED CLAMP FOR POSITIONING CARGO AND METHOD OF MAKING THE SAME**
F-FÖRMIGE KLEMME ZUR GEPÄCKFIXIERUNG UND HERSTELLUNGSVERFAHREN DAFÜR
ORGANE DE SERRAGE EN FORME DE F POUR POSITIONNER UNE CARGAISON ET PROCEDE DE REALISATION DE CELUI-CI

(30) Priority: 06.12.2006 CN 200610119222
(43) Date of publication of application: 01.10.2008
(73) Proprietor: Zhejiang Topsun Logistic Control Co., Ltd., Zhejiang 317600 (CN)
(72) Inventor: RUAN, Boqin, Yuhuan, Zhejiang 317600 (CN)
(74) Representative: Elzaburu Marquez, Alberto
(86) International application number: PCT/CN2007/000776
(87) International publication number: WO 2008/067695

(56) References cited:
- EP-A1- 1 108 609
- EP-A1- 1 108 609
- WO-A2-2006/029117
- DE-U1- 20 016 200
- DE-U1- 20 219 098
- DE-U1-202006 011 207
- US-A- 5 443 342
- US-A- 5 813 647

## Description

### BACKGROUND OF THE INVENTION

### Field of Invention

The present invention relates to the field of mechanics, in particular, to a device used in a motor vehicle for fixing goods.

### Related Art

The goods on the motor vehicle must be fixed during transportation so as to prevent being displaced. Ropes could be used to bind the goods for common convertibles. However, ordinary ropes could not be used for containers or van trucks. This way, it is necessary to employ a special fixing device.

Therefore, people have designed various kinds of fixing devices through long-term research.

EP 1108609 A1 is showing the preamble of independent claim 1 and refers to a device for securing loads on the platform of a vehicle in the form of a beam-type section with connecting elements provided thereon, in particular a preferably extruded hollow section with hook-like connecting elements mounted at both ends on each of which a clamping web is situated opposite the end edge of the section. A slide-in body of a clamping element comprising the clamping web can be introduced into the end of the beam-type section or hollow section of the device and is mounted in the interior of the section in such a manner that it can move along the longitudinal axis of the hollow section. The clamping web is the leg of an angle section displaceably guided in the clamping element. It may also comprise a guide gap in the clamping element for one leg or bearing web of the angle section movable therein, the other leg forming the clamp web, wherein the guide gap may be open at least at its end pointing the sliding direction. A swiveling lever movable in the direction of the main axis of the cross section is connected to at least one moulded-on bearing portion on the clamping element on the guide gap(s) directed away from the slide-in body by means of a pivot pin and the distance between the clamping web and its mating clamping surface can be adjusted by means of this swiveling lever. The bearing straps in which a swivel pin passing through the bearing end of the swiveling lever is seated project from the clamping element and/or a lever arm is hinged to the swiveling lever at a distance from its hinge point and is pivoted by means of a bottom end to the angle section.

Though these devices could function to fix the goods, they still have some defects more or less. For example, these devices have a relatively complicated structure, a high cost, a complex process, low production efficiency, a ponderous mass and may not have enough structural strength when clamped. Moreover, some of these devices are not convenient for operation and use.

### SUMMARY OF THE INVENTION

To address the above-mentioned problems, the object of the invention is to provide an F-shaped goods clamp which is convenient and reliable on operation and use with a simple structure, high strength and a low production cost, and could save a large amount of raw materials.

To achieve the above object, the present invention provides an F-shaped goods clamp, comprising an L-shaped supporter consisted of a stationary clamping piece and a locating piece integrated therewith and an L-shaped cleat composed of a mobile clamping piece and a connecting piece integrated therewith, the connecting piece being slidably coupled with the locating piece to have the supporter and the cleat F-shaped integrally, a clamping mechanism being provided between the connecting piece and the locating piece to keep the mobile clamping piece and the stationary clamping piece in a clamped state, characterized in that the locating piece having a raised couple board at the back which has two open-ended chutes disposed back to back, a bar groove opened at the end being provided on the connecting piece, such that the couple board is set within the bar groove and could move back and forth along the bar groove, and that a reinforced rib is set at the coupling position of the mobile clamping piece and the connecting piece, and a curling hole is provided at the end of the connecting piece to be hinged with the slide bar.

The stress in the bending portion of the cleat is relatively concentrated while clamped, which tends to cause fracture and distortion. To increase the structural strength of said portion, a reinforced rib is set at the coupling position of the mobile clamping piece and the connecting piece, and a curling hole is provided at the end of the connecting piece to be hinged with the slide bar.

According to the present invention, an F-shaped structure is formed by using a supporter and a cleat. The supporter could be moved relative to the cleat, so that the supporter and the cleat could be clamped on the vehicle fixing device with the clamping mechanism. A steel tube could be fixed in the compartment or the container by using two F-shaped goods clamps, which blocks the goods inside to function as fixing the goods.

Due to the fact that the end of the bar groove is opened, the connecting piece is conveniently mounted on the couple board.

In the F-shaped goods clamp of the invention, the clamping mechanism comprises a hand grip hinged to the locating piece and a slide bar hinged to the connecting piece. The other end of the slide bar passes through a square groove located on the hand grip. A movable slider is set on the slide bar, which is coupled with the hand grip. The slider has a compression spring set on the slide bar at each end thereof. While the hand grip is pulled backwards, the slider set on the slide bar is moved, and the slide bar could be moved backwards with the compression springs thereby. As the slide bar is hinged with the connecting piece, the mobile clamping piece could be moved to the stationary clamping piece until the vehicle fixing device is clamped by the mobile clamping piece and the stationary clamping piece, so that the whole F-shaped goods clamp is secured.

In the F-shaped goods clamp of the invention, the hinge point of the hand grip and the locating piece is higher than the couple point of the hand grip and the slider when the hand grip is in a clamped position. This way, the hand grip is turned a deflection angle while clamped to ensure that the hand grip will not automatically return without external forces during operation, which improves the safety performance.

The present invention employs the plate or profile as the production material of main parts of the device. The plate or profile is easy to form the required shape by stamping and the required parts are obtained by bending molding. In such a manner, the operation efficiency is effectively improved. On the other hand, a large amount of production material is saved by using the light plate or profile compared with the conventional casting process. Therefore, the entire device is light and simple in structure and convenient for use. The other parts required by the F-shaped goods clamp of the invention in the step (B), such as the springs, plastic cover and bolt, could use standard parts.

The F-shaped goods clamp of the invention has several benefits over the prior art.

Firstly, the entire device has a simple structure, high overall strength and a good safety performance, and is convenient for installation; a conditioning mechanism is further provided to adjust the device according to specific application conditions, making the device more flexible.

Secondly, the production material, such as the plate or profile, is formed by stamping. The material is significantly saved compared with the conventional casting process, leading to a distinct reduction in cost of material, a simple process and a low processing cost, as well as more reliable strength than that of the casting piece.

Thirdly, the processing period is shortened by using the stamping process to enhance the production efficiency. Furthermore, the weight of the device is far smaller than that of the casting piece by using the plate or profile as the production material. Therefore, the device is relatively convenient for use.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below for illustration only, and thus are not limitative of the present invention, and wherein:
FIG. 1 is a front view showing the structure of the F-shaped goods clamp of the invention;
FIG. 2 is a top view showing the structure of the F-shaped goods clamp of the invention;
FIG. 3 is a diagram showing the F-shaped goods clamp of the invention with the hand grip in an opened state;
FIG. 4 is a diagram showing the F-shaped goods clamp of the invention with the hand grip in a closed state;
FIG. 5 is a diagram showing the F-shaped goods clamp of the invention with the hand grip in use;
FIG. 6 is a stretched-out view showing the roughcast of the supporter of the F-shaped goods clamp of the invention;
FIG. 7 is a diagram showing the molded roughcast of the supporter of the F-shaped goods clamp of the invention;
FIG. 8 is a stretched-out view showing the roughcast of the cleat of the F-shaped goods clamp of the invention;
FIG. 9 is a diagram showing the molded roughcast of the cleat of the F-shaped goods clamp of the invention;
FIG. 10 is a stretched-out view showing the roughcast of the hand grip of the F-shaped goods clamp of the invention; and
FIG. 11 is a diagram showing the molded roughcast of the hand grip of the F-shaped goods clamp of the invention.

### DETAILED DESCRIPTION OF THE INVENTION

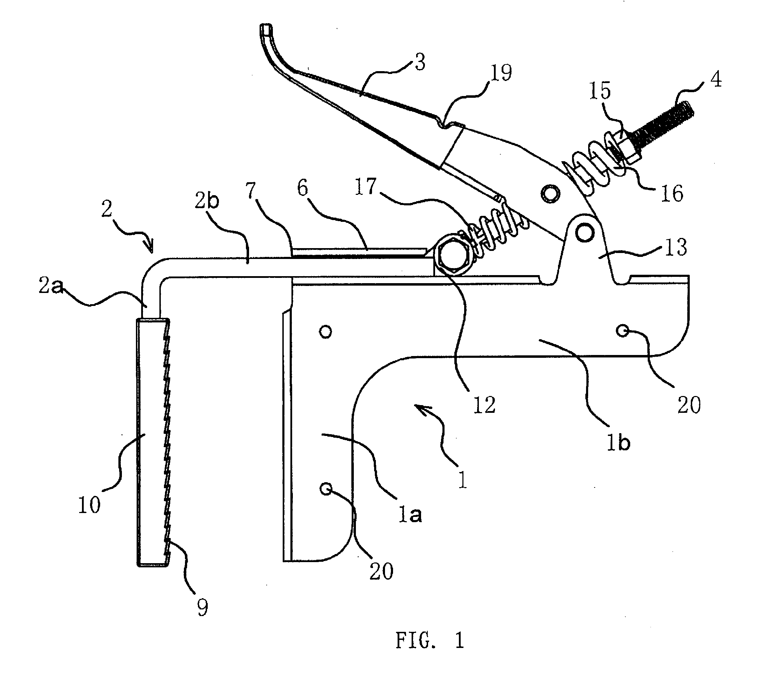

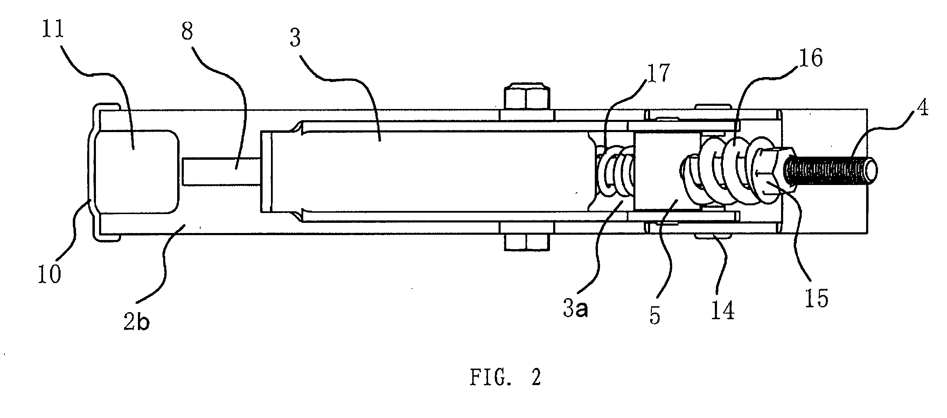

As shown in figs. 1 and 2, the F-shaped goods clamp of the invention has a supporter 1, a cleat 2, a hand grip 3, a slide bar 4, a slider 5 and compression springs including a big spring 16 and a small spring 17.

The L-shaped supporter 1 is consisted of a stationary clamping piece 1a and a locating piece 1b integrated therewith. The L-shaped cleat 2 is composed of a mobile clamping piece 2a and a connecting piece 2b integrated therewith. The connecting piece 2b is slidably coupled with the locating piece 1b to have the supporter 1 and the cleat 2 F-shaped integrally. The locating piece 1b has a raised couple board 6 at the back, which has two open-ended chutes 7 disposed back to back. A bar groove 8 opened at the end is provided on the connecting piece 2b. The couple board 6 is set within the bar groove 8, and could move back and forth along the bar groove 8. A clamping mechanism is provided between the connecting piece 2b and the locating piece 1b to keep the mobile clamping piece 2a and the stationary clamping piece 1a in a clamped state.

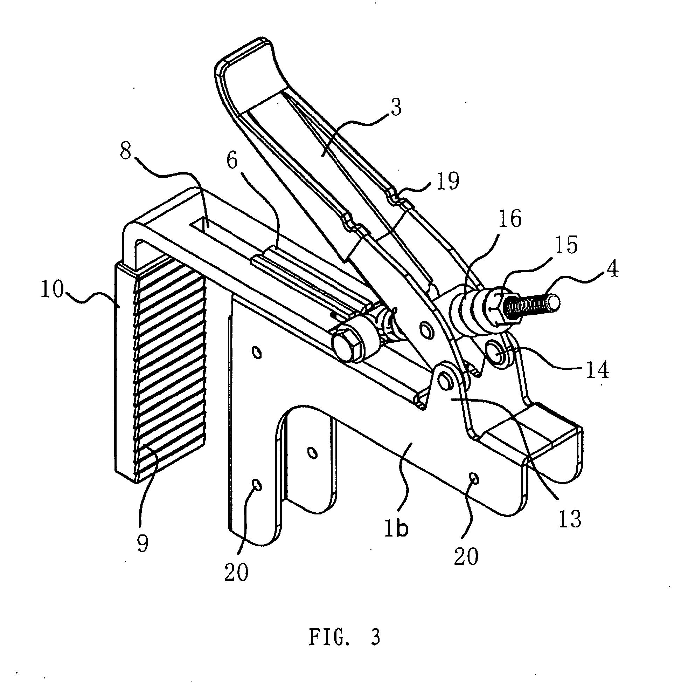

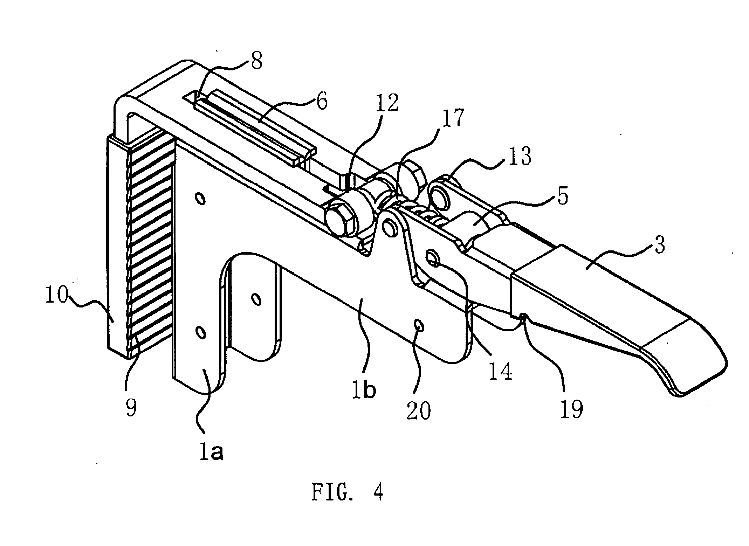

As shown in figs. 3 and 4, the clamping mechanism has a hand grip 3 hinged to the locating piece 1b and a slide bar 4 hinged to the connecting piece 2b. The locating piece 1b is provided with two raised ear-like hinge elements 13 symmetrically disposed at the back, with which the hand grip 3 is hinged via a pivot 14. A curling hole 12 is provided at the end of the connecting piece 2b to be hinged with the slide bar 4. The slide bar 4 is hinged with the curling hole 12 through a pivot 14. The front end of the slide bar 4 is pressed into a flat tube to reduce the height of the curling hole 12 of the cleat 2, thereby reducing the difficulty for processing the curling hole 12 and facilitating stamping and curling round. The other end of the slide bar 4 passes through a square groove 3a on the hand grip 3. A movable slider 5 is set on the slide bar 4, which is coupled with the hand grip 3. The slider 5 has a compression spring set on the slide bar 4 at each end thereof, i.e., a big spring 16 and a small spring 17. The small spring 17 is set at the inner side of the slider 5 and the big spring 16 is set at the outer side.

A plastic cover 10 is wrapped around the mobile clamping piece 2a, which has several friction enhancing teeth 9 set on the inner side thereof. In such a case, not only the friction force is increased to prevent slippage, but also abrasion is reduced, which achieves a protection function. The stress in the bending portion of the cleat 2 is relatively concentrated while clamped, which tends to cause fracture. To this end, a reinforced rib 11 is set at the coupling position of the mobile clamping piece 2a and the connecting piece 2b, which guarantees the device not to be distorted by forces and eliminates the problem of looseness.

The slide bar 4 has threads at the rear end, on which a lock nut 15 is set for adjusting the compression springs. The small spring 17 is set at the front and the big spring 16 is set at the rear end, so that the thickness of the vehicle fixing device and the magnitude of the clamping force can be adjusted by conditioning the lock nut 15 at the rear end of the slide bar 4.

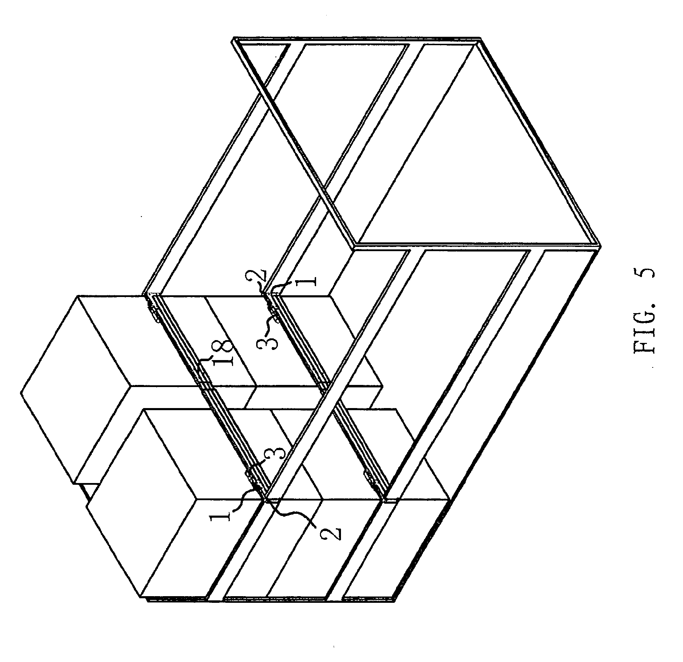

In fig.5, the goods fixing device has two sets of F-shaped goods clamps. Two supporters are connected with two ends of a stretchable square tube 18. The supporters 1 and the cleats 2 of the F-shaped goods clamps at said two ends clamp are clamped on the fixing devices to fix the goods, thereby making sure the goods will not be moved during transportation. Several couple holes 20 are arranged on the supporter 1 of the F-shape goods clamp to mate with the square tube 18.

As shown in fig. 3, the hand grip of the F-shape goods clamp is in an opened state, and the opening distance between the supporter 1 and the cleat 2 is the largest at this point. When the goods have to be fixed, the self-lock nut 15 is firstly adjusted to generate a suitable clamping width between the supporter 1 and the cleat 2, and then the vehicle fixing device is clamped. While the hand grip 3 is pulled backwards, the slider 5 set on the slide bar 4 is moved, and the slide bar 4 could be moved backwards with the compression springs thereby. As the slide bar 4 is hinged with the connecting piece 2b, the mobile clamping piece 2a could be moved to the stationary clamping piece 1a until the vehicle fixing device is clamped by the mobile clamping piece and the stationary clamping piece, so that the whole F-shaped goods clamp is secured as shown in fig.4. It is evident that the goods are prevented moving by securing the square tube 18 fixed with the supporter 1. When the hand grip 3 is in a clamped position, the hinge point of the hand grip 3 and the locating piece 1b is higher than the couple point of the hand grip 3 and the slider 5. The hand grip 3 is turned a deflection angle while clamped to ensure that the hand grip 3 will not automatically return without external forces during operation, which improves the safety performance.

The conventional steel castings have many defects. For example, the roughcasts of the steel castings usually have a high weight, resulting in a whole group of heavy products. Furthermore, the casting process is relatively complex and has a high processing cost and a high cost of material. Therefore, the F-shape goods clamp of the invention is manufactured by the method comprising the following steps of
(1) producing a supporter 1, a cleat 2 and a hand grip 3:
   (a) stamping: placing a plate or profile in a punch press to form the predesigned roughcasts of parts;
   (b) bending: bending molding each of said roughcasts of parts; and
   (c) drilling: drilling holes on the molded supporter 1, cleat 2 and hand grip 3 according to the assembly requirements to form the finished parts;
(2) producing other parts: producing the parts required by the F-shape goods clamp of the invention other than the supporter 1, cleat 2 and hand grip 3 by using the conventional process, such as the springs, plastic cover and bolt; and
(3) assembling: assembling the above parts to obtain the finished product.

The supporter 1, cleat 2 and hand grip 3 are products manufactured by pressurized separation, molding and joining of the plate or profile. The detailed producing process of the supporter 1, cleat 2 and hand grip 3 of the F-shape goods clamp of the invention in the foregoing steps will be described hereinafter.

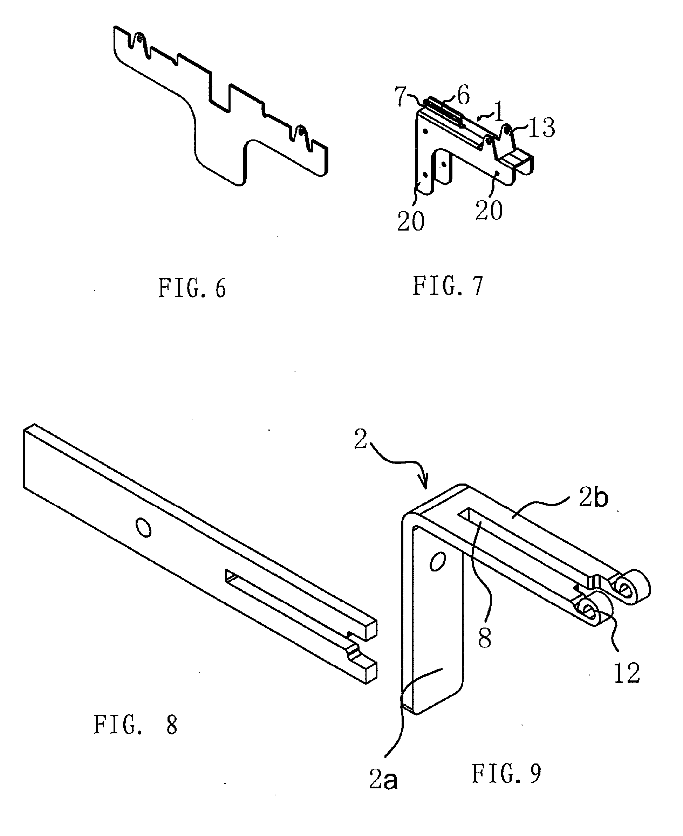

The supporter 1 is manufactured as follows. Firstly, the plate or profile is punched and separated by the punch press and a roughcast with an approximate T-shape is obtained as shown in fig. 6. The roughcast is cleaned and deburred. Then two shoulders of the T-shaped roughcast are bended 90 degrees to the same direction to form an L-shaped structure. The protruded pieces on the two shoulders are turned outward to form the open-ended chutes 7. Then a portion of said shoulders are bended inward, so that the shoulders are combined to form two open-ended chutes 7 disposed back to back. This way, the molded supporter 1 is accomplished as shown in fig. 7. The ear-like hinge elements 13 are partially disposed on the shoulders and never bended, so that they are symmetrically stood on the supporter 1 after bending molding.

The cleat 2 is manufactured as follows. Firstly, the plate or profile is punched and separated by the punch press and a bar roughcast with a longitudinal groove is obtained as shown in fig. 8. The opening of the groove is set at one end of the roughcast. The roughcast is cleaned and deburred. Then the bar roughcast is bended 90 degrees at the middle part thereof to form an L-shape. The end of the roughcast with the opening of the groove is curled round to form the curling hole 12. This way, the molded cleat 2 is accomplished as shown in fig. 9. In order to improve the strength, a reinforce rib 11 is set at the coupling position of the mobile clamping piece 2a and the connecting piece 2b of the cleat 2.

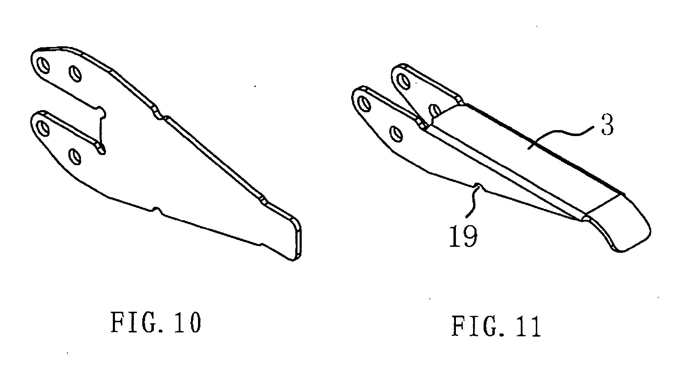

The hand grip 3 is manufactured as follows. Firstly, the plate or profile is punched and separated by the punch press and a roughcast having a square groove at one end is obtained as shown in fig. 10. The roughcast is cleaned and deburred. Then two sides of the roughcast are bended 90 degrees to the same direction to form the molded hand grip 3 shown in fig.11.

The supporter 1, cleat 2 and hand grip 3 can not be totally symmetrically bended during bending and a deviation is generated. In order to actually position the other parts, the mounting or locating hole could not be punched firstly when stamping, and should be processed as required after bending molding. In the step (b), a plastic layer is attached to the front end of the cleat 2 and the handshaking position of the hand grip 3 by plastic soaking, and the joints of the supporter 1 are connected as one piece by welding. A half-round hole 19 is set at the handshaking position of the hand grip 3, so that the plastic layer at the surface of the hand grip 3 will not be peeled off after plastic soaking. The hand grip 3 has four holes at the front end to be hinged with the supporter 1 and slider 5 through rivets and knurled rivets respectively. The above bending sequence could be changed to the actual requirements.

The assembling process is performed after all the parts are produced and prepared, which includes hinging the hand grip 3 to the ear-like elements 13 via the pivot 14, inserting the cleat 2 into the open-ended chutes 7 of the supporter 1 through the bar groove 8, and slidably connecting the open-ended chutes 7 of the supporter 1 to the cleat 5 through the bar groove 8; hinging the slide bar 4 into the curled circle at the rear end of the cleat 2 through a pivot; passing the slider bar equipped with the small spring 17 through the slider 5 set on the hand grip 3, and then mounting the big spring 16 on the slide bar 4 and screwing the lock nut at the rear end thereof.

The above description is intended to be illustrative of the invention and should not be taken to be limiting. Other embodiments within the scope of the present invention are possible. Those skilled in the art will readily implement the steps necessary to provide the structures and the methods disclosed herein. Variations and modifications of the embodiments disclosed herein can be made based on the description set forth herein, without departing from the scope of the invention defined by the appended claims.

### List of Reference Numerals

- 1: supporter
- 1a: stationary clamping piece
- 1b: locating piece
- 2: cleat
- 2a: mobile clamping piece
- 2b: connecting piece
- 3: hand grip
- 3a: square groove
- 4: slide bar
- 8: bar groove
- 9: friction enhancing teeth
- 10: plastic cover
- 11: reinforced rib
- 12: curling hole
- 13: ear-like hinge element
- 14: pivot
- 15: lock nut
- 16: big spring
- 17: small spring
- 18: square tube
- 19: half-round hole
- 20: couple hole

## Claims

1. An F-shaped goods clamp, comprising an L-shaped supporter (1) consisted of a stationary clamping piece (1a) and a locating piece (1b) integrated therewith and an L-shaped cleat (2) composed of a mobile clamping piece (2a) and a connecting piece (2b) integrated therewith, the connecting piece (2b) being slidably coupled with the locating piece (1b) to have the supporter (1) and the cleat (2) F-shaped integrally, a clamping mechanism being provided between the connecting piece (2b) and the locating piece (1b) to keep the mobile clamping piece (2a) and the stationary clamping piece (1a) in a clamped state, **characterized in that** the locating piece (1b) has a raised couple board (6) at the back which has two open-ended chutes (7) disposed back to back, a bar groove (8) opened at the end being provided on the connecting piece (2b), such that the couple board (6) is set within the bar groove (8) and could move back and forth along the bar groove (8), and that a reinforced rib (11) is set at the coupling position of the mobile clamping piece (2a) and the connecting piece (2b), and a curling hole (12) is provided at the end of the connecting piece (2b) to be hinged with the slide bar (4).

2. The F-shaped goods clamp as claimed in Claim 1, **characterized in that** the clamping mechanism comprises a hand grip (3) hinged to the locating piece (1b) and a slide bar (4) hinged to the connecting piece (2b), the other end of the slide bar (4) passes through a square groove (3a) located on the hand grip (3), a movable slider (5) is set on the slide bar (4), the slider (5) is coupled with the hand grip (3), and the slider (5) has a compression spring set on the slide bar (4) at each end thereof.

3. The F-shaped goods clamp as claimed in Claim 2, **characterized in that** the hinge point of the hand grip (3) and the locating piece (1b) is higher than the couple point of the hand grip (3) and the slider (5) when the hand grip (3) is in a clamped position.

## Patentansprüche

1. Es geht sich um einer F-förmigen Warenklemme, desser Charakterzug wie folgende bezeichnetet ist: Die Warenklemme besteht zumeist aus einer Stütze(1) und einem Klemmbrett(2). Die F-förmige Stütze ist sich aus einer unbeweglichen Klemmscheibe (1a) und einer Positionsscheibe(1b) zusammengesetzt. Das auch in F Form ausgesehene Klemmbrett (2) bildet sich aus einem beweglichen Klemmscheibe(2a) und einer Verbindungsscheibe (2b), die sich in einer vollständigen Einheit vereinigen. Die o.g. Verbindungsscheibe (2b) ist in beweglicher Weise an die Positionsscheibe (1b) angeschlossen, sodaß die Stütze(1) und das Klemmbrett (2) in F Form darbieten. Zwischen dem o.g. Verbindungssscheibe (2b) und dem Positionssscheibe (1b) ist eine Klemmvorrichtung versehen, **dadurch** die o.g. beweglichen-(2a) und unbeweglichen Klemmscheibe (1a) in Kemmzustand festgehalten sind, Am Rücken der genannten Positionscheibe (1b) gibt es ein konvexes Verbindungsblech(6), auf demjenigen(6), sich zwei Rücken an Rücken angeordneten offenen Gleitkrippen(7) befinden. An der Verbindungsscheibe (2b) ist eine streifenförmige Nut(8) angebracht, wo das Ende is geöffnet.Das beschribene Verbindungsblech(6) ist in der o.g. Streifennut(8) überzogen, und rutscht derentlang(8) vor und hinter, An der Verbindungspunkt zwischen der dargestellten beweglichen Klemm-(2a) und der Verbindungsscheibe (2b) ist mit einer Verstarkungsrippe(11) ausgestattet. Am Ende der Verbindungsscheibe (2b) ist ein Rollloch(12) aufgesetzt, um an die Gleitstange(4) anzuschließen.

2. Gemäß der Patentanspruch 1, besteht der Charkterzug der F-förmigen Warenklemme darin: Die bezeichnete Klemmvorrichtung umfaßt einen mit der Positionsscheibe (1b) angelenkten Griff(3) und eine mit der Verbindungsscheibe (2b) angelenkte Gleitstange(4). Das andere Ende der Gleitstange(4) geht durch die viereckige Nut (3a), die auf dem Griff(3) versehen. Auf der Gleitstange(4) ist noch ein rutschbares Gleitblock(5) ausgestattet. Mit dem Griff(3) verbindet sich das Gleitblock(5), an dessen beiden Enden(5), jeweils eine auf der Gleitstange(4) aufgesetzte Kompressionsfeder aufgesetzt ist.

3. Nach der Patentanspruch 2, besteht der Charkterzug der F-förmigen Warenklemme darin: Der Anlenkpunkt zwischen dem Griffs(3) und der Positionscheibe (1b) ist höher als Verbindungspunkt zwischen dem Griff(3) und dem Gleitblock(5), wenn sich der Griff(3) in der Klemmposition befindet.

## Revendications

1. Une pince à objets en forme de F, comprenant une base en forme de L (1) constitué d'une pièce de serrage fixe (1a) et d'une pièce de positionnement (1b) qui lui est intégrée et une barre en forme de L (2) composée d'une pièce de serrage mobile (2a) et d'une pièce de liaison (2b) qui lui est intégrée, la pièce de liaison (2b) étant liée en translation avec la pièce de positionnement (1b) afin d'intégrer à la forme en F la base (1) et la barre (2), un mécanisme de serrage étant prévu entre la pièce de liaison (2b) et la pièce de positionnement (1b) afin de maintenir la pièce de serrage mobile (2a) et la pièce de serrage fixe (1a) dans un état de serrage, **caractérisé en ce que** la pièce de positionnement (1b) présente une plaque d'accouplement en saillie (6) au dos qui inclut deux glissières ouvertes à leurs extrémités (7) disposées dos à dos, une rainure rectiligne (8) ouverte à son extrémité est prévue sur la pièce de liaison (2b), de telle façon que la plaque d'accouplement (6) est placée dans la rainure rectiligne (8) et peut se déplacer dans les deux sens au long de la rainure rectiligne (8), et une nervure renforcée (11) est placée à la position d'accouplement de la pièce de serrage mobile (2a) et de la pièce de liaison (2b), et un trou contourné (12) est prévu à l'extrémité de la pièce de liaison (2b) afin de l'articuler avec la barre coulissante (4).

2. La pince à objets en forme de F selon la Revendication 1, **caractérisée en ce que** le mécanisme de serrage comporte une poignée (3) articulée sur la pièce de positionnement (1b) et une barre coulissante (4) articulée sur la pièce de liaison (2b), l'autre extrémité de la barre coulissante (4) passe dans une rainure carrée (3a) située sur la poignée (3), un coulisseau mobile (5) est placé sur la barre coulissante (4), le coulisseau (5) est lié à la poignée (3), et le coulisseau (5) comprend un ressort de compression fixé sur la barre coulissante (4) à chacune de ses extrémités.

3. La pince à objets en forme de F selon la Revendication 2, **caractérisée en ce que** le point d'articulation de la poignée (3) et de la pièce de positionnement (1b) est plus haut que le point de liaison de la poignée (3) et du coulisseau (5) lorsque la poignée (3) est en position de serrage.
